# EUROPEAN PATENT APPLICATION

(11) **EP 2 268 109 A2**
(43) Date of publication of application: **29.12.2010**
(21) Application number: 10167211.1
(22) Date of filing: 24.06.2010
(51) Int. Cl.: H05B 41/288

(54) **Discharge lamp lighting device and illumination device using the same**

(30) Priority: 25.06.2009 JP 2009151642
(71) Applicant: Panasonic Electric Works Co., Ltd, Kadoma-shi Osaka 571-8686 (JP)
(72) Inventor: Yamahara, Daisuke, Shijonawate Osaka (JP); Komatu, Naoki, Nada-ku, Kobe Hyogo (JP)
(74) Representative: Abel, Thomas Mario

(57) **Abstract**

[Object] To provide a discharge lamp lighting device capable of preventing a load current from increasing in a region where a load voltage is low when a discharge lamp is abnormal without increasing a cost, and an illumination device using the same.

[Means for Settlement] A control circuit 5 is provided which gives a drive signal to switching elements Q1 to Q5 corresponding to a result detected by a detection circuit 4 so as to control an output voltage of a step-down circuit 1 and a high-frequency voltage of a polarity inversion circuit 2 respectively.

A minimum value Tonmin of an on duration Ton during which the switching element Q1 of the step-down circuit 1 is turned on and a maximum value Toffmax of an off duration Toff during which the switching element Q1 of the step-down circuit 1 is turned off are set for the drive signal. The control circuit 5 has variable means 50 for changing the maximum value Toffmax of the off duration Toff of the drive signal corresponding to the result detected by the detection circuit 4, and the variable means 50 increases the maximum value Toffmax of the off duration Toff of the drive signal with a decrease in a load voltage La.

## Description

### [Field of the Invention]

The present invention relates to a discharge lamp lighting device and an illumination device using the same.

### [Background Art]

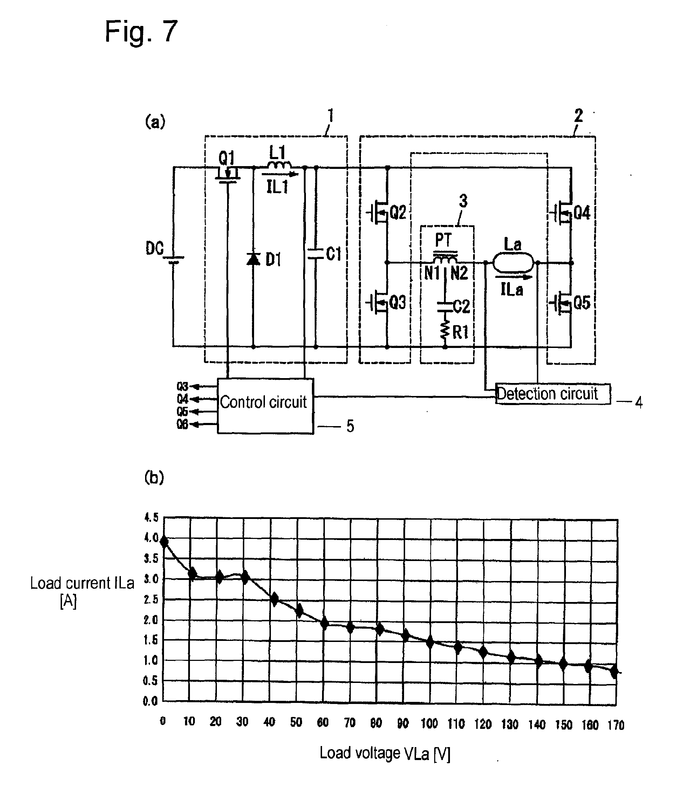

A discharge lamp lighting device has been conventionally known which supplies a lighting power to a high-pressure discharge lamp such as a mercury lamp and a metal halide lamp. A conventional discharge lamp lighting device will be described below referring to drawings. As shown in Fig. 7(a), this conventional discharge lamp lighting device includes a step-down circuit 1 for stepping down a DC voltage supplied from a DC power source DC to a desired voltage value to output it, a polarity inversion circuit 2 for inverting an output voltage of the step-down circuit 1 into a high-frequency voltage to output it, a resonance circuit 3 to which the high-frequency voltage from the polarity inversion circuit 2 is applied to light a discharge lamp La by a resonance action, a detection circuit 4 for detecting a load voltage VLa and a load current ILa to be supplied to the discharge lamp La, and a control circuit 5 for controlling the step-down circuit 1 and the polarity inversion circuit 2 corresponding to a result detected by the detection circuit 4.

The step-down circuit 1 includes a series circuit of a switching element Q1, an inductor L1 and a capacitor C1 that are connected between output ends of the DC power source DC, and a diode D1 connected to the connection point of the switching element Q1 and the inductor L1. The step-down circuit 1 turns on and off the switching element Q1 by a drive signal supplied from the control circuit 5 to step down the DC voltage from the DC power source DC, and then outputs it between both the ends of the capacitor C1.

The polarity inversion circuit 2 includes a series circuit of switching elements Q2 and Q3 and a series circuit of switching elements Q4 and Q5 connected in parallel with each other. The resonance circuit 3 and the discharge lamp La are connected between the connection point of the switching elements Q2 and Q3 and the connection point of the switching elements Q4 and Q5. In addition, each of the switching element Q1 of the step-down circuit 1 and the switching elements Q2 to Q5 of the polarity inversion circuit 2 includes a field-effect transistor (FET). The resonance circuit 3 is configured so that a series circuit of a primary winding N1 and a second winding N2 of a pulse transformer PT is connected in series with the discharge lamp La, and a series circuit of a capacitor C2 and a resistor R1 is connected between the connection point of the primary winding N1 and the secondary winding N2 of the pulse transformer PT and the an output end on a lower voltage side of the step-down circuit 1. The detection circuit 4 is connected between both the ends of the discharge lamp La, and detects the load voltage VLa that is applied between both the ends of the discharge lamp La via a resistor not shown, and the load current ILa flowing through the discharge lamp La.

The control circuit 5, for example, including a microcomputer, controls a frequency and a duty ratio of the drive signal for turning on and off the switching element Q1 so as to detect an output voltage of the step-down circuit 1 and a current IL1 flowing through the inductor L1, as well as to maintain the output voltage of the step-down circuit 1 to a predetermined voltage. Furthermore, in the polarity inversion circuit 2, each of the switching elements Q2 to Q5 receives the drive signal so that one of a pair of switching elements Q2 and Q5 and the other of a pair of switching elements Q3 and Q4 are alternately turned on and off. The control circuit 5 reads the result detected by the detection circuit 4 and appropriately changes the frequency of the drive signals of the switching elements Q2 to Q5 corresponding to the detected result, thereby controlling start and lighting of the discharge lamp La.

Here, the capacitor C1 eliminates a ripple component from the current IL1 flowing through the inductor L1 of the step-down circuit 1 to obtain the load current ILa flowing through the discharge lamp La. Then, the control circuit 5 sets a target value of the current IL1 flowing through the inductor L1 so that the appropriate load current ILa flows to the discharge lamp La, thereby controlling an on duration Ton and an off duration Toff of the drive signal to be given to the switching element Q1.

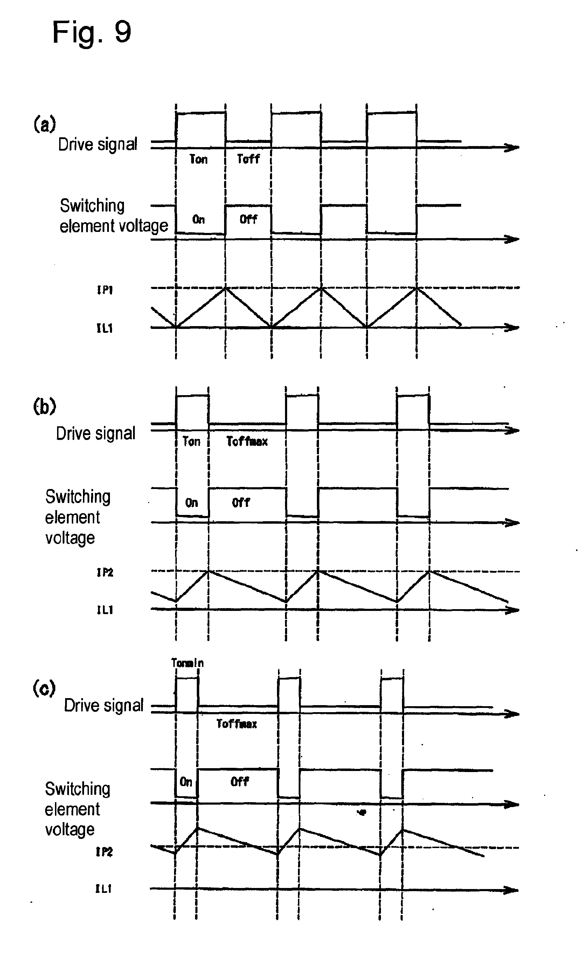

In general, there are two operation modes as operations of the step-down circuit 1, i.e., a current critical mode and a current continuation mode. The current critical mode is the operation mode in which the control circuit 5 turns the switching element Q1 on at a moment the current flowing though the inductor L1 becomes zero, as shown in Fig. 9(a). This operation mode has a feature of low switching loss at the switching element Q1. In contrast, the current continuation mode is the operation mode in which the control circuit 5 switches on/off of the switching element Q1 so that the current flowing though the inductor L1 does not become zero, as shown in Fig. 9(b).

The step-down circuit 1 is generally operates in the current critical mode with less switching loss while the discharge lamp La lights with stability. However, at the starting of the discharge lamp La with a low load voltage VLa, time required until the current IL1 flowing through the inductor L1 becomes zero tends to be longer, and thus a switching frequency f in the current critical mode may enter into an audio frequency region of a human.

Patent document 1 discloses the solution of the above-mentioned problem. According to the invention disclosed in the patent document 1, a maximum value Toffmax of an off duration Toff of a drive signal supplied to the switching element Q1 is set and the switching element Q1 is driven so that the off duration Toff does not exceed the maximum value Toffmax, thereby preventing the switching frequency f from entering into the audio frequency region. Furthermore, in order to be sure to switch the switching element Q1 from an off state to an on state, a minimum value Tonmin of the on duration Ton is set.

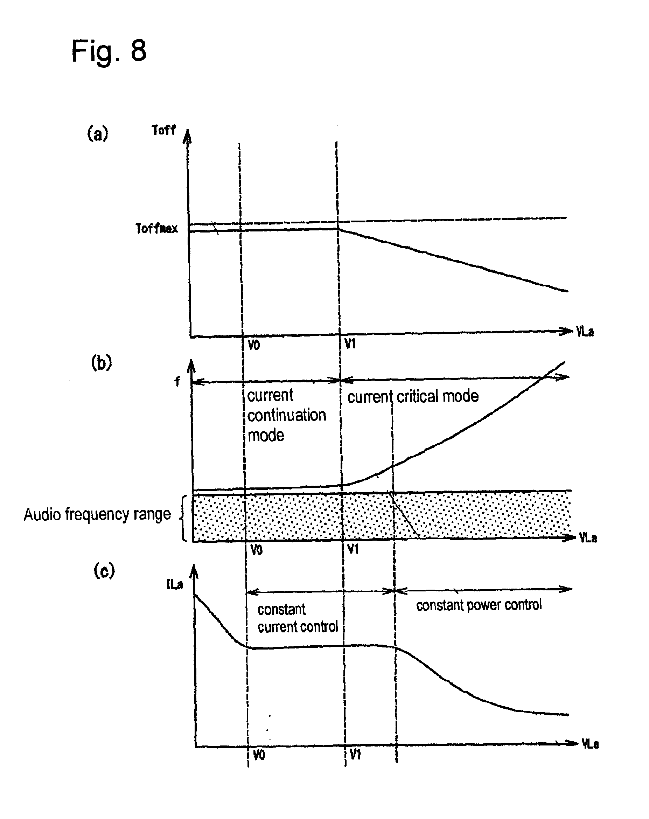

In general, the high-pressure discharge lamp has a low load voltage VLa for a while since it is started, and requires up to about twice more load current ILa than that required during stable lighting until it reaches the stable lighting. Therefore, a constant current control is carried out in a region where the load voltage VLa is low. Furthermore, when the load voltage VLa reaches a certain voltage or more, the constant power control is carried out to obtain a stable light output (refer to Figs. 8 (a) to 8 (c)).

The switching operation of the switching element Q1 will be described below referring to Fig. 9, with regard to three durations VLa≥V1, V0<VLa<V1, and VLa≤V0, assuming that a load voltage when the on duration Ton reaches the minimum value Tonmin is V0, and a load voltage when the off duration Toff reaches the maximum value Toffmax is V1.

In the case of VLa≥V1, the step-down circuit 1 operates in a current critical mode, as shown in Fig. 9(a). That is, the control circuit 5 sets a target value IP1 of the current IL1 flowing through the inductor L1 corresponding to the load voltage VLa and the load current ILa detected by the detection circuit 4, and controls the switching element Q1 to turn off when the current IL1 flowing through the inductor L1 reaches the target value IP1, and to turn on when the current IL1 flowing through the inductor L1 reaches zero.

In the case of V0<VLa<V1, the step-down circuit 1 operates in the current continuation mode, as shown in Fig. 9(b). That is, the control circuit 5 sets a target value IP2 of the current IL1 flowing through the inductor L1 corresponding to the load current ILa detected by the detection circuit 4, and controls the switching element Q1 to turn off when the current IL1 flowing through the inductor L1 reaches the target value IP2, and to turn on when the current then passes the maximum value Toffmax of the off duration Toff.

Here, if the discharge lamp La is in a normal state and a connection thereof to the discharge lamp La is normal, the load voltage VLa is larger than V0 and could not be smaller than V0. If there exists an abnormality such as the discharge lamp La being not mounted properly or the connection thereof to the discharge lamp La being not normal, however, the load voltage VLa may be smaller than V0.

In the case of VLa≤V0, the step-down circuit 1 operates in the current continuation mode, as shown in Fig. 9(c). That is, similar to the case of V0<VLa<V1, the control circuit 5 sets a target value IP2 of the current IL1 flowing through the inductor L1 corresponding to the load current ILa detected by the detection circuit 4, and intends to control the switching element Q1 to turn off when the current IL1 flowing through the inductor L1 reaches the target value IP2, and to turn on when the current then passes the maximum value Toffmax of the off duration Toff.

### [Conventional Technique Document]

### [Patent Document]

Patent Document 1: Japanese Translation of PCT No. 1998-511220

### [Disclosure of the Invention]

### [Problems to be solved by the Invention]

In the conventional example, however, in the region of VLa≤V0, i.e., the region in which the load voltage VLa is very low such as V0 or less (0 to 10V), the on duration Ton cannot be made further shorter because the on duration Ton reaches the minimum value Tonmin, and the off duration Toff cannot be made further longer because the off duration Toff reaches the maximum value Toffmax. Therefore, because the switching operation of the switching element Q1 is carried out in a state where the current IL1 flowing through the inductor L1 exceeds the target value IP2, the load current ILa cannot be controlled, which have caused a problem that an increase in the load current ILa is resulted (refer to Figs. 7(b) and 8(c)). Thus, the components constituting the circuit are required to be upsized or enhanced in their performance so as to be able to withstand an increase of the load current ILa, which have caused a problem of an increase in cost.

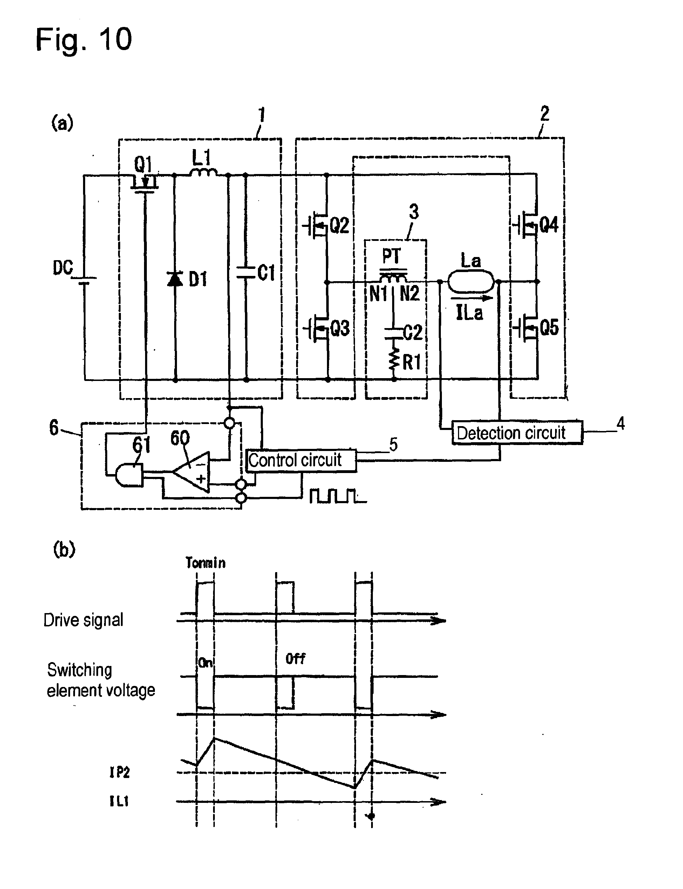

There is means adapted to solve the problem described above in which an auxiliary circuit 6, which includes a comparator 60 for comparing the current IL1 flowing through the inductor L1 with a threshold value set at the control circuit 5, and a multiplier 61 for multiplying an output from the comparator 60 by a drive signal outputted from the control circuit 5, is provided between the switching element Q1 and the control circuit 5, as shown in Fig. 10(a). Providing the auxiliary circuit 6 can prevent the current IL1 flowing through the inductor L1 from increasing over the threshold in a region where the load voltage VLa is very low. This solution, however, requires addition of an extra circuit, and also a problem arises in which using a driving IC for the switching element Q1 causes a malfunction such as an improper operation due to a narrow pulse.

As shown in Fig. 10(b), there is another solution in which the control circuit 5 acts on the switching element Q1 not to output an on signal when the current IL1 flowing through the inductor L1 is at the threshold value or more. This solution causes a problem of an increase in the ripple of the current IL1 flowing through the inductor L1.

The present invention has been made in view of the foregoing, and it is an object of the present invention to provide a discharge lamp lighting device capable of preventing the load current from increasing in the region where the load voltage is low when the discharge lamp is abnormal without increasing a cost, and the illumination device using the same.

### [Means adapted to solve the Problems]

In order to achieve the object described above, according to a first aspect of the present invention, a step-down circuit for stepping down a DC voltage from a DC power source to output the voltage, the step-down circuit being provided with at least a switching element and an inductor; a polarity inversion circuit for periodically inverting a polarity of an output voltage from the step-down circuit to output a high-frequency voltage, the polarity inversion circuit being provided with one or more switching elements; a resonance circuit for lighting a discharge lamp by a resonance action with receiving the high-frequency voltage from the polarity inversion circuit; a detection circuit for detecting a load voltage and a load current to be supplied to the discharge lamp; and a control circuit for giving a drive signal for turning on and off the switching elements of the step-down circuit and the polarity inversion circuit to the switching element corresponding to a result detected by the detection circuit so as to control the output voltage of the step-down circuit and the high-frequency voltage of the polarity inversion circuit respectively, is provided, wherein a minimum value of an on duration and a maximum value of an off duration are set for the drive signal, during the on duration the switching element of the step-down circuit being turned on, and during the off duration the switching element of the step-down circuit being turned off; the control circuit has variable means adapted to change the maximum value of the off duration of the drive signal corresponding to the result detected by the detection circuit; and the variable means increases the maximum value of the off duration of the drive signal with a decrease in the load voltage.

According to a second aspect of the present invention, in the first aspect of the present invention, the variable means changes the maximum value of the off duration when the on duration of the drive signal is at the minimum value.

According to a third aspect of the present invention, in the first aspect of the present invention, the variable means changes the maximum value of the off duration when the load voltage falls below the minimum value of the voltage that the load voltage may take on in a course from starting to stable lighting when the discharge lamp is normal.

According to a fourth aspect of the present invention, in the first aspect of the present invention, the variable means changes the maximum value of the off duration when the load current of the discharge lamp exceeds a predetermined current value.

According to a fifth aspect of the present invention, in any one of the first to fourth aspects of the present invention, the minimum value of the on duration of the drive signal is set to a magnitude capable of switching the switching element of the step-down circuit from an off state to an on state.

According to a sixth aspect of the present invention, in any one of the first to fifth aspects of the present invention, the control circuit includes at least a microcomputer.

A seventh aspect of the present invention includes the discharge lamp lighting device according to any one of the first to sixth aspects of the present invention, and a device main body for accommodating the discharge lamp.

### [Effect of the Invention]

According to the present invention, increasing the maximum value of the off duration of the drive signal in the region where the load voltage is low when the discharge lamp is abnormal makes it possible to prevent the increase in the load current. Therefore, there is no need to upsize the components constituting the circuit or enhance the performance thereof, or to provide an extra circuit, as is required conventionally, thereby making it possible to prevent the increase in cost.

### [Brief Description of the Drawings]

[Fig.1] Fig. 1 is a diagram showing a first embodiment of a discharge lamp lighting device according to the present invention, wherein Fig. 1(a) is a circuit diagram, and Fig 1. (b) is a time chart diagram.
[Fig.2] Fig. 2 is a correlation diagram between a load voltage and each parameter of the one described above.
[Fig.3] Fig. 3 is a correlation diagram between a load voltage and each parameter of a second embodiment of the discharge lamp lighting device according to the present invention.
[Fig.4] Fig. 4 is a diagram showing a startup characteristic of the load voltage of the one described above.
[Fig.5] Fig. 5 is a correlation diagram between a load voltage and each parameter of a third embodiment of a discharge lamp lighting device according to the present invention.
[Fig.6] Figs. 6(a) to 6(c) are diagrams showing the embodiments of an illumination device according to the present invention.
[Fig.7] Fig. 7 is a diagram showing a conventional discharge lamp lighting device, wherein Fig. 7(a) is a circuit diagram, and Fig. 7(b) is a correlation diagram between a load voltage and a load current.
[Fig.8] Figs. 8(a) to 8(c) are correlation diagrams between a load voltage and each parameter of the one described above.
[Fig.9] Figs. 9(a) to 9(c) are time charts of the one described above.
[Fig.10] Figs 10(a) and 10(b) are diagrams showing examples of general solutions for problems that the one described above has.

### [Best Mode for Carrying Out the Invention]

### (First Embodiment)

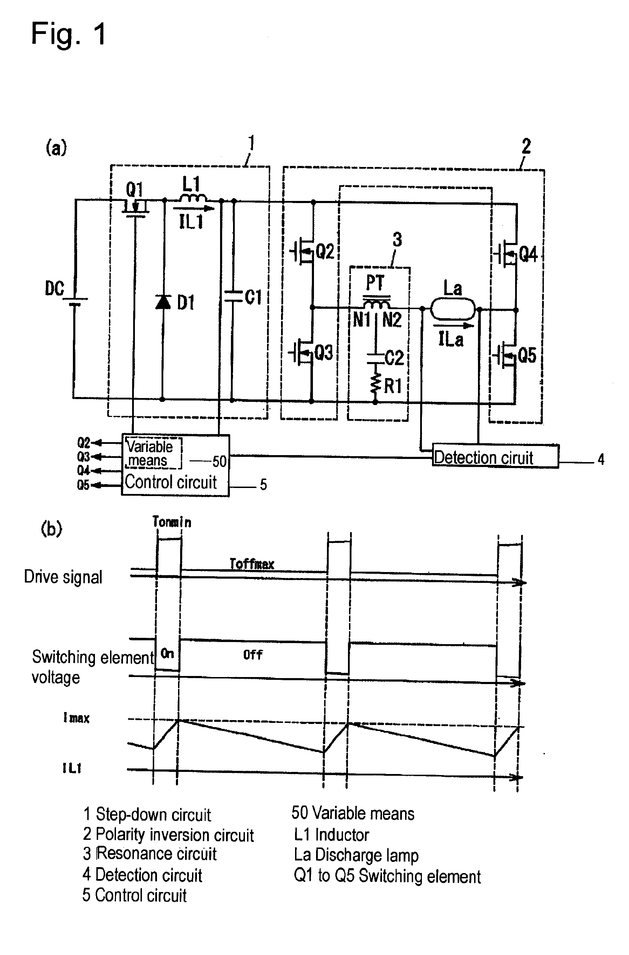

The description will be made below regarding a first embodiment of a discharge lamp lighting device according to the present invention referring to drawings. In addition, since a basic configuration of the present embodiment is similar to a conventional example, like components are denoted by the same numerals and explanations thereof will be omitted. As shown in Fig. 1(a), the present embodiment is **characterized in that** the control circuit 5 is provided with variable means 50 adapted to change the maximum value Toffmax of the off duration Toff of a drive signal corresponding to a result detected by the detection circuit 4.

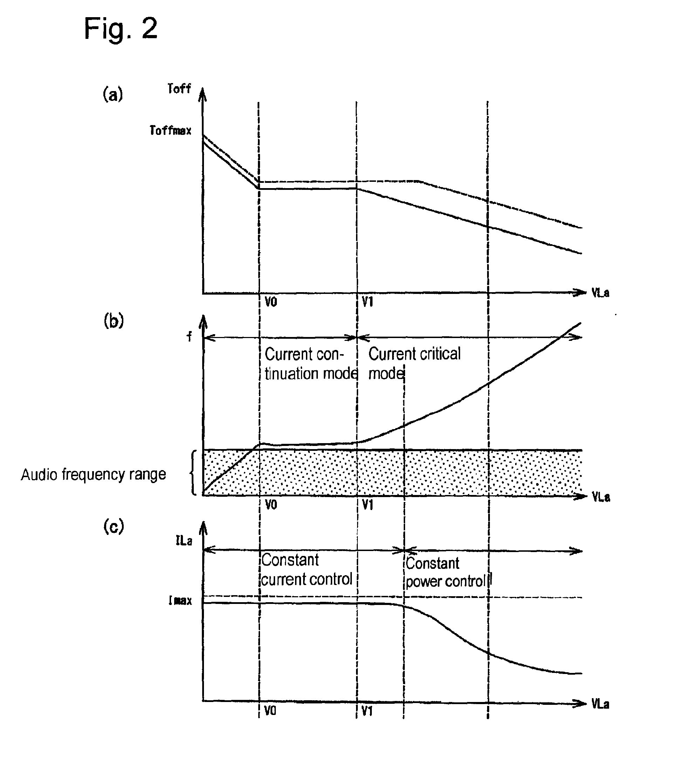

A main operation of the present embodiment will be described below referring to the drawings. As shown in Figs. 2(a) to 2(c), control similar to that in the conventional example is performed in both the case of VLa≥V1 and the case of V0<VLa<V1. In addition, in the control circuit 5 in the present embodiment, the maximum value Toffmax of the off duration Toff of the drive signal is set to be small with increase in the load voltage VL as a protection function in the case where timing to switch the switching element Q1 from off to on resulting from failing to detect the current IL1 flowing through the inductor L1 in the current critical mode. Such setting enables the switching operation to be carried out at a frequency slightly less than the actual switching frequency f of the drive signal even when the timing to switch the switching element Q1 from off to on is delayed for some reason. Thus, it is possible to shorten a period during which supply of the current IL1 flowing through the inductor L1 is stopped as much as possible, thereby reducing a possibility of going out of the discharge lamp La.

In the case of VLa≤V0, i.e., in the case where an occurrence of abnormality in a connection and wiring of the discharge lamp La causes the load voltage VLa to enter into a lower region, and then the on duration Ton of the drive signal reaches the minimum value Tonmin, the conventional example reveals that the load current ILa cannot be controlled because the off duration Toff of the drive signal reaches the maximum value Toffmax, resulting in an increase in the load current ILa. In contrast, in the present embodiment, when the on duration Ton of the drive signal reaches the minimum value Tonmin, the variable means 50 changes the maximum value Toffmax of the off duration Toff of the drive signal. Specifically, the control is performed so that the maximum value Toffmax of the off duration Toff of the drive signal increases with a decrease in the load voltage VLa.

Therefore, since it is possible to elongate the off duration Toff of the drive signal to decrease the current IL1 flowing through the inductor L1, the load current ILa can be resultingly suppressed to an acceptable maximum value Imax of the load current ILa or below (refer to Fig. 1(b)). The maximum value Imax of the load current ILa is appropriately decided from, for example, a rating of a component constituting the circuit. In fact, the control of the current IL1 flowing through the inductor L1 is late due to the delay and the like, so that the load current ILa may be large. It is thus preferable to control the maximum value Toffmax of the off duration Toff of the drive signal to change in proximity when the on duration Ton of the drive signal reaches the minimum value Tonmin. In addition, the control to increase the maximum value Toffmax of the off duration Toff of the drive signal causes the switching frequency f to enter into the audio frequency range. However, the load voltage VLa rises over time after the start of the discharge lamp La, and the switching frequency f enters into the audio frequency range in a short period of time. This is thus not a problem in actual use. Also in the present embodiment, although the maximum value Toffmax of the off duration Toff of the drive signal is changed linearly, the change may be nonlinear or stepwise.

As described above, even if the on duration Ton of the drive signal reaches the minimum value Tonmin in a region where the load voltage VLa is low when the discharge lamp La is abnormal, increase in the maximum value Toffmax of the off duration Toff of the drive signal can prevent the load current ILa from increasing. Therefore, since it is not necessary to upsize a component constituting the circuit or enhance their performance, or to provide an extra circuit as required conventionally, increase in cost can be prevented.

### (Second embodiment)

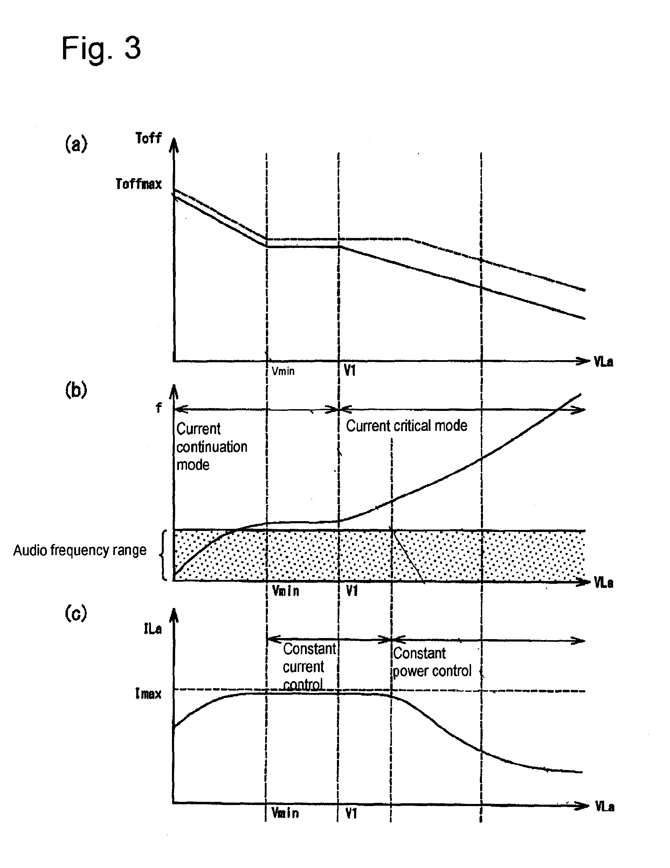

A second embodiment of the discharge lamp lighting device according to the present invention will be described below referring to drawings. A basic configuration of the present embodiment is, however, similar to that in the first embodiment, so that like components are denoted by the same numerals and will not be explained. As shown in Figs. 3(a) to 3(c), the present embodiment is **characterized in that** the variable means 50 changes the maximum value Toffmax of the off duration Toff when the load voltage VLa falls below the minimum value Vmin of the voltage that the load voltage VLa may take on in the course from the starting to the stable lighting when the discharge lamp La is normal.

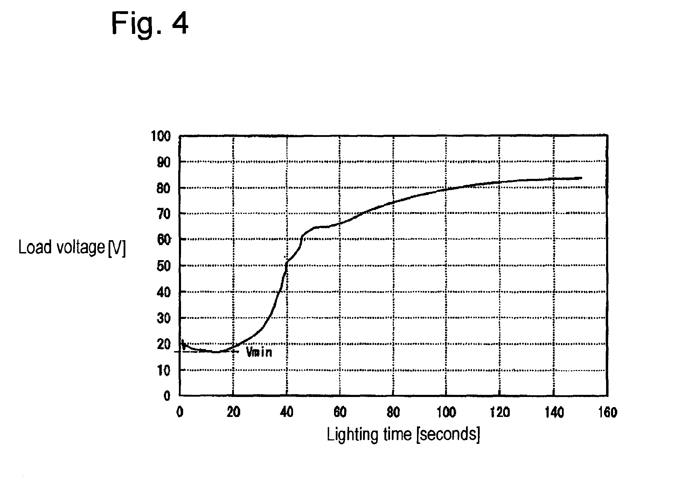

As shown in Fig. 4, the load voltage VLa typically does not fall below Vmin (about 18V) if mounting and wiring of the discharge lamp La is normal. Also, the minimum value Vmin is generally constant if the type of the discharge lamp La is the same. Therefore, in the present embodiment, the maximum value Toffmax of the off duration Toff of the drive signal is changed in a range below the minimum value Vmin of the load voltage VLa that the load voltage VLa may take on when the discharge lamp La is normal. Specifically, the control is performed so that the maximum value Toffmax of the off duration Toff of the drive signal increases with a decrease in the load voltage VLa, similar to the first embodiment.

Therefore, since it is possible to elongate the off duration Toff of the drive signal to decrease the current IL1 flowing through the inductor L1, the load current ILa can be resultingly suppressed to the maximum value Imax of the acceptable load current ILa or below (refer to Fig. 3(b)). The maximum value Imax of the load current ILa is appropriately decided from, for example, a rating of a component constituting the circuit. In fact, the control of the current IL1 flowing through the inductor L1 is late due to the delay and the like, so that the load current ILa may be large. It is thus preferable to control the maximum value Toffmax of the off duration Toff of the drive signal to change in proximity when the load voltage VLa reaches the minimum value Vmin. Also in the present embodiment, although the maximum value Toffmax of the off duration Toff of the drive signal is changed linearly similar to the first embodiment, the change may be nonlinear or stepwise.

As described above, even if load voltage VLa falls below the minimum value Vmin of the voltage that the load voltage VLa may take on in a course from starting to stable lighting when the discharge lamp La is normal in the region where the load voltage VLa is low when the discharge lamp La is abnormal, increase in the maximum value Toffmax of the off duration Toff of the drive signal can prevent the load current ILa from increasing. Therefore, since it is not necessary to upsize a component constituting the circuit or enhance their performance, or to provide an extra circuit as required conventionally, increase in cost can be prevented.

### (Third embodiment)

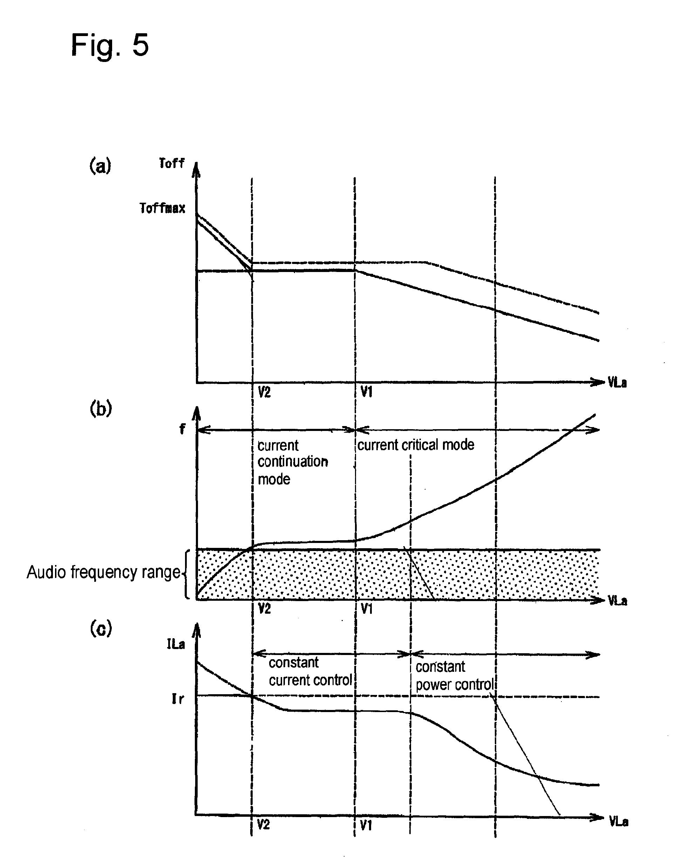

A third embodiment of the discharge lamp lighting device according to the present invention will be described below referring to drawings. A basic configuration of the present embodiment is, however, similar to that in the first embodiment, so that like components are denoted by the same numerals and will not be explained. As shown in Fig. 5(a) to 5(c), the present embodiment is **characterized in that** the variable means 50 changes the maximum value Toffmax of the off duration Toff when the load current ILa of the discharge lamp La exceeds a predetermined current value Ir. Specifically, the control is performed so that the maximum value Toffmax of the off duration Toff of the drive signal increases with a decrease in the load voltage VLa, similar to the first embodiment.

Therefore, since it is possible to elongate the off duration Toff of the drive signal to decrease the current IL1 flowing through the inductor L1, the load current ILa can be resultingly suppressed to the predetermined current value Ir or below (refer to Fig. 5(b)). The predetermined current value Ir is appropriately decided from, for example, a rating of a component constituting the circuit. In fact, the control of the current IL1 flowing through the inductor L1 is late due to the delay and the like, so that the load current ILa may be large. It is thus preferable to control the maximum value Toffmax of the off duration Toff of the drive signal to change in proximity when the load current ILa reaches the predetermined current value Ir. Also in the present embodiment, although the maximum value Toffmax of the off duration Toff of the drive signal is changed linearly similar to the first embodiment, the change may be nonlinear or stepwise.

As described above, even if the load current ILa exceeds the predetermined current value Ir in the region where the load voltage VLa is low when the discharge lamp La is abnormal, increase in the maximum value Toffmax of the off duration Toff of the drive signal can prevent the load current ILa from increasing. Therefore, since it is not necessary to upsize a component constituting the circuit or enhance their performance, or to provide an extra circuit as required conventionally, increase in cost can be prevented.

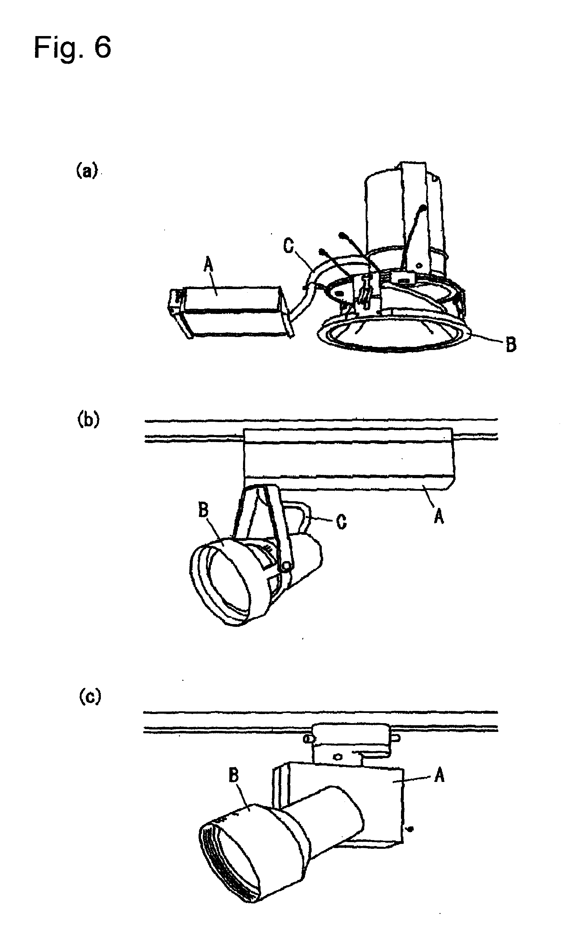

In addition, the discharge lamp lighting device in the embodiments described above can be provided in illumination devices as shown in Figs. 6(a) to 6(c). Fig. 6(a) shows an example in which the discharge lamp lighting device is applied to a downlight, and Figs. 6(b) and 6(c) show examples in which the discharge lamp lighting device is applied to a spotlight. In the drawings, A denotes the discharge lamp lighting device, B denotes a device main body accommodating the discharge lamp La, and C denotes a wiring for electrically connecting a socket (not shown) for mounting the discharge lamp to the discharge lamp lighting device. Furthermore, an illumination system can be achieved which is provided with a plurality of the illumination devices mentioned above, and a control device for collectively or individually controlling each illumination device, the control device being provided in a path for supplying a power from an external power source to each illumination device.

### [Description of Reference Numerals]

- 1: Step-down circuit
- 2: Polarity inversion circuit
- 3: Resonance circuit
- 4: Detection circuit
- 5: Control circuit
- 50: Variable means
- L1: Inductor
- La: Discharge lamp
- Q1 to Q5: Switching element

## Claims

1. A discharge lamp lighting device, comprising:
a step-down circuit for stepping down a DC voltage from a DC power source to output the voltage, the step-down circuit being provided with at least a switching element and an inductor;
a polarity inversion circuit for periodically inverting a polarity of an output voltage from the step-down circuit to output a high-frequency voltage, the polarity inversion circuit being provided with one or more switching elements;
a resonance circuit for lighting a discharge lamp by a resonance action with receiving the high-frequency voltage from the polarity inversion circuit;
a detection circuit for detecting a load voltage and a load current to be supplied to the discharge lamp; and
a control circuit for giving a drive signal for turning on and off the switching elements of the step-down circuit and the polarity inversion circuit to the switching element corresponding to a result detected by the detection circuit so as to control the output voltage of the step-down circuit and the high-frequency voltage of the polarity inversion circuit respectively, wherein:
a minimum value of an on duration and a maximum value of an off duration are set for the drive signal, during the on duration the switching element of the step-down circuit being turned on, and during the off duration the switching element of the step-down circuit being turned off;
the control circuit has variable means adapted to change the maximum value of the off duration of the drive signal corresponding to the result detected by the detection circuit; and
the variable means increases the maximum value of the off duration of the drive signal with a decrease in the load voltage.

2. The discharge lamp lighting device according to claim 1, wherein the variable means changes the maximum value of the off duration when the on duration of the drive signal is at the minimum value.

3. The discharge lamp lighting device according to claim 1, wherein the variable means changes the maximum value of the off duration when the load voltage falls below a minimum value of the voltage that the load voltage may take on in a course from starting to stable lighting when the discharge lamp is normal.

4. The discharge lamp lighting device according to claim 1, wherein the variable means changes the maximum value of the off duration when the load current of the discharge lamp exceeds a predetermined current value.

5. The discharge lamp lighting device according to any one of claims 1 to 4, wherein the minimum value of the on duration of the drive signal is set to a magnitude capable of switching the switching element of the step-down circuit from the off state to the on state.

6. The discharge lamp lighting device according to any one of claims 1 to 5, wherein the control circuit includes at least a microcomputer.

7. An illumination device, comprising:
the discharge lamp lighting device according to any one of claims 1 to 6; and
a device main body for accommodating the discharge lamp.
